# EUROPÄISCHE PATENTSCHRIFT

(11) **EP 2 014 439 B1**
(45) Veröffentlichungstag und Bekanntmachung des Hinweises auf die Patenterteilung: **02.09.2009**
(21) Anmeldenummer: 08004845.7
(22) Anmeldetag: 14.03.2008
(51) Int. Cl.: B29C 45/00, B29C 45/14, F16K 7/12, F16K 27/02

(54) **Verfahren zum Herstellen eines Ventilkörpers aus Kunststoff**
Method for manufacturing a plastic valve body
Procédé destiné à la fabrication d'un corps de soupape en plastique

(30) Priorität: 11.06.2007 DE 102007026887
(43) Veröffentlichungstag der Anmeldung: 14.01.2009
(73) Patentinhaber: GEMÜ Gebrüder Müller Apparatebau GmbH & Co. KG, 74653 Ingelfingen (DE)
(72) Erfinder: Müller, Fritz, 74653 Ingelfingen (DE)
(74) Vertreter: Steimle, Josef

(56) Entgegenhaltungen:
- CH-A- 388 717
- DE-A1- 2 704 026
- US-A- 5 520 213

## Beschreibung

Die Erfindung befasst sich mit einem Verfahren zum Herstellen eines Ventilkörpers aus Kunststoff, welcher Anschlussenden mit einer Innenkontur mit einem größeren Innendurchmesser als eine Sitzkontur am Ventilbereich hat.

Ventilkörper dieser Baurt, wie beispielweise in des CH-A-388 717 dargestellt, werden üblicherweise aus Kunststoff mittels Spritzgießen hergestellt. Um die Entformung des Spritzgusskörpers sicherzustellen, bleiben bei der bisher üblichen Herstellungsweise am Übergangsbereich von der Innenkontur der Anschlussenden zu der Sitzkontur am Ventilbereich aufgrund der Durchmesserverjüngung vorspringende und unstetige Teilbereiche stehen, welche bei der Durchströmung des Ventilkörpers beim Einsatz zu Turbulenzen und Wirbelbildungen führen, welche einen erhöhten Strömungswiderstand mit sich bringen. Bei einem stetigen Übergang von der Innenkontur am Anschlussende mit einem größeren Nenndurchmesser zu der Sitzkontur am Ventilbereich mit einem kleinen Nenndurchmesser müssen nämlich Hinterschneidungen gebildet werden, welche aber eine Entformung des Spritzgusskörpers aus Kunststoff unmöglich machen.

Die Erfindung zielt daher darauf ab, ein Verfahren zum Herstellen eines Ventilkörpers aus Kunststoff, welcher Anschlussenden mit einer Innenkontur mit einem größeren Nenndurchmesser als eine Sitzkontur am Ventilbereich hat, bereitzustellen, bei der man eine strömungsoptimierte Kontur am Übergangsbereich der Innenkontur von Anschlussenden zur Sitzkontur am Ventilbereich erhält, um eine Durchströmung des Ventilkörpers im Einsatzzustand mit möglichst geringem Strömungswiderstand und ohne nennenswerte Turbulenzen und Wirbelbildungen zu erzielen.

Nach der Erfindung wird hierzu ein Verfahren zum Herstellen eines Ventilkörpers aus Kunststoff, welcher Anschlussenden mit einer Innenkontur mit einem größeren Nenndurchmesser als eine Sitzkontur am Ventilbereich hat, bereitgestellt, welches sich dadurch auszeichnet, dass zuerst ein Rohling mit den vorgegebenen Innenkonturen mittels Spritzgießen aus Kunststoff ausgeformt wird und dieser Rohling in eine Form mit Hinterschneidungen am Übergangsbereich zur Sitzkontur am Ventilbereich mit kleinerem Durchmesser eingelegt, erwärmt und an die Kontur der Form zur Ausbildung der Hinterscheidungen im Innenkonturbereich angepresst wird, wodurch der Ventilkörper derart strömungsoptimiert wird, dass bei Anschlussenden mit einer vorgegebenen Nennweite der Durchflusswert der nächst größeren Nennweite erreicht wird.

Beim erfindungsgemäßen Verfahren wird somit in einem ersten Verfahrensschritt ein Rohling mittels Spritzgießen hergestellt, dessen Innenkontur zu Entformungszwecken frei von Hinterschneidungen ist und daher im Übergangsbereich von den Anschlussenden der Sitzkontur am Ventilbereich mit einem kleineren Durchmesser einen Unstetigkeitsbereich hat. Zur Strömungsoptimierung der Innenkontur an diesem Übergangsbereich werden dann in einem zweiten Verfahrensschritt Hinterschneidungen am Übergangsbereich zur Sitzkontur am Ventilbereich mit kleinerem Durchmesser dadurch ausgebildet, dass dieser Rohling mit dem Unstetigkeitsbereich in eine Form eingelegt wird, welche an dem Übergangsbereich die Hinterschneidungen hat, der Rohling erwärmt und an die Kontur der Form zur Ausbildung der Hinterschneidungen im Innenkonturbereich angepresst wird. Auf diese Weise werden bei dem zweiten Verfahrensschritt durch eine entsprechende Wärmebehandlung und eine Druckbeaufschlagung von innen an dem Übergangsbereich zur Sitzkontur Hinterschneidungen ausgebildet, so dass man einen stetigen und kontinuierlichen sowie strömungsoptimierten Übergang zu der Innenkontur von Anschlussenden am Ventilbereich erhält. Somit gestattet das erfindungsgemäße Herstellungsverfahren die Herstellung eines Ventilkörpers aus Kunststoff, welcher einen weitgehend stetigen Übergang von Anschlussenden mit einer Innenkontur mit einem größeren Innendurchmesser zur Sitzkontur am Ventilbereich hat, so dass sich bei der Durchströmung des Ventilkörpers nach der Erfindung ein verminderter Strömungswiderstand ergibt, und sich Turbulenzen und Wirbelbildungen im Übergangsbereich an der Innenkontur wirksam verhindern lassen.

Bei dem erfindungsgemäßen Verfahren erfolgt das Anpressen des in die Form mit Hinterschneidungen eingelegten Rohlings mittels unter Überdruck stehendem Gas, vorzugsweise Luft.

Der so nach dem erfindungsgemäßen Verfahren hergestellte Ventilkörper mit einem stetigen Verlauf der Innenkontur ausgehend von den Anschlussenden mit größerem Innendurchmesser über eine Sitzkontur mit geringerem Innendurchmesser kann dann anschließend mit einem verstärkten Kunststoff außenseitig umspritzt werden.

Für den Innenkörper oder Rohling kommen vorzugsweise als Kunststoffe PFA, PVDF oder dergleichen in Betracht. Für den Außenkörper werden alle spritzbaren Kunststoffe, insbesondere PVC, PP, PVDF oder dergleichen eingesetzt.

Insgesamt erhält man somit bei dem erfindungsgemäßen Herstellungsverfahren einen Ventilkörper mit einer strömungsoptimierten Innenkontur mit Hinterschneidungen auf herstellungstechnisch möglichst kostengünstige Weise. Insbesondere gestattet das erfindungsgemäße Herstellungsverfahren die Ausbildung von strömungsoptimierten Hinterschneidungen am Übergangsbereich der Innenkontur von den Anschlussenden mit einer vorgegebenen Nennweite zur Erzielung eines Durchflusswertes der nächst größeren Nennweite. Vorzugsweise umfasst der nach der Erfindung hergestellte Ventilkörper einen zweilagigen Aufbau, wenn der die Innenkontur bildende Rohling nach der Ausbildung der Hinterschneidungen noch von einem verstärkten Kunststoff außenseitig umgeben ist, wobei dieser aus verstärktem Kunststoff bestehende Außenkörper ebenfalls mittels Spritzgießen vorzugsweise hergestellt wird.

Die Erfindung wird nachstehend anhand einer bevorzugten Ausführungsform unter Bezugnahme auf die beigefügte Zeichnung in Form eines nicht beschränkenden Beispieles näher erläutert. In der Zeichnung gilt:
- Fig. 1: ist eine schematische Schnittansicht durch einen mittels Spritzgießen hergestellten Rohling mit einer Innenkontur im Bereich eines Innenkörpers, dessen Innenkontur einen Unstetigkeitsbereich am Übergang von den Anschlussenden zur Sitzkontur hat,
- Fig. 2: zeigt in einer der Figur 1 ähnlichen Schnittansicht die Ausbildung von Hinterschneidungen der Innenkontur des Innenkörpers, welche nach dem erfindungsgemäßen Verfahren ausgeformt sind, und
- Fig. 3: zeigt in einer Schnittansicht längs der Linie B-B in Figur 2 die strömungsoptimierte Innenkontur des nach der Erfindung hergestellten Ventilkörpers mit den Hinterschneidungsbereichen.

In den Figuren der Zeichnung sind gleiche oder ähnliche Teile mit denselben Bezugszeichen versehen.

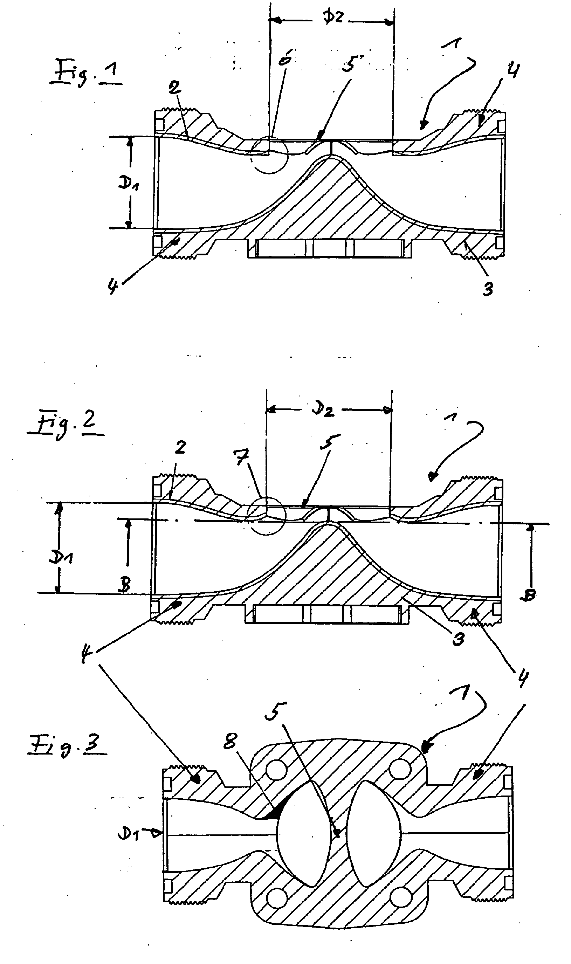

In den Figuren der Zeichnung ist ein Ventilkörper aus Kunststoff insgesamt mit dem Bezugszeichen 1 versehen. Wie aus den Figuren 1 und 2 zu ersehen ist, umfasst dieser Ventilkörper 1 einen Innenkörper 2, welcher von einem Außenkörper 3 aus einem verstärkten Kunststoff umgeben ist. Der Ventilkörper 1 besitzt mit 4 bezeichnete Anschlussenden, welche vorzugsweise längs des Ventilkörpers 1 einander gegenüber liegen und welche als Stutzen, eine Verschraubung, eine Klemmverbindung oder dergleichen ausgebildet sein können. Die Anschlussenden 4 haben an der Innenkontur einen Nenndurchmesser D1, und der Ventilbereich umfasst eine Sitzkontur 5, welche einen Nenndurchmesser D2 besitzt. Der Nenndurchmesser D1 der Anschlussenden 4 ist größer als der Durchmesser D2 der Sitzkontur 5 am Ventilbereich des Ventilkörpers 1.

Wie aus Figur 1 zu ersehen ist, wird beim erfindungsgemäßen Herstellungsverfahren der Innenkörper 2 mittels Spritzgießen als Rohling ausgebildet, dessen Innenkontur am Übergang von den Anschlussenden 4 zur Sitzkontur 5 des Ventilbereichs einen Unstetigkeitsbereich 6 hat, um den Rohling nach dem Spritzgießen aus Kunststoff aus der Spritzgussform entnehmen zu können. Bei der Durchströmung des Ventilkörpers 1 würden sich an diesem Unstetigkeitsbereich 6 Turbulenzen und Wirbel bilden, welche eine Erhöhung des Widerstandes mit sich bringen.

Wie aus Figur 2 zu ersehen ist, wird dieser Innenkörper 2 als Rohling nach dem Spritzgießen mit dem Unstetigkeitsbereich 6 an der Innenkontor in eine in Figur 2 beispielsweise gezeigte Form eingelegt, welche gerade an diesem Übergangsbereich einen stetigen Übergang 7 hat, wodurch sich an diesem Übergangsbereich Hinterschneidungen 8 bilden, welche in Figur 3 verdeutlicht sind und als schwarze Bereiche dargestellt sind. Wenn dieser Innenkörper 2 mit dem Unstetigkeitsbereich 6 als Rohling in die Form entsprechend Figur 2 eingelegt ist, wird der Innenkörper 2 erwärmt und zugleich an die Kontur der Form zur Ausbildung der Hinterschneidungen 8 im Innenkonturbereich angepresst. Hierdurch erhält man einen in Figur 2 mit 7 bezeichneten stetigen Übergang der Innenkontur am Innenkörper am Übergangsbereich zur Sitzkontur 5 des Ventilbereichs mit kleinerem Durchmesser D2 des Ventilkörpers 1. Hierdurch erhält man einen derart strömungsoptimierten Ventilkörper 1, dass bei Anschlussenden 4 mit einer vorgegebenen Nennweite der Durchflusswert der nächst größeren Nennweite erreicht wird, wobei die Sitzkontur 5 im wesentlichen frei von Unstetigkeitsbereichen ist. Hierdurch erhält man bei einem derart ausgeformten Innenkörper 2 einen günstigen Widerstandsbeiwert mit günstigeren und verbesserten Durchströmungsverhältnissen des Ventilkörpers 1 im Einsatzzustand.

Wie ebenfalls insbesondere aus Figur 2 zu ersehen ist, kann dieser Innenkörper 2 zur Bildung eines Außenkörpers 3 außenseitig mit einem verstärkten Kunststoffmaterial umspritzt werden. Hierdurch erhält man dann einen Ventilkörper 1, welcher einen Außenkörper 3 aus verstärktem Kunststoff und einen Innenkörper 2 mit einer weitgehend stetig verlaufenden Innenkontur umfasst.

Bei dem in der Figur 2 verdeutlichten Schritt des Herstellungsverfahrens nach der Erfindung erfolgt das Anpressen der Innenkontur des Innenkörpers 2 an den Übergangsbereich zur Ausbildung der Hinterschneidungen 8 vorzugsweise mittels eines unter Überdruck stehenden Gases, welches insbesondere von Druckluft gebildet wird.

Zusammenfassend zeigen die Figuren der Zeichnung ein Herstellungsverfahren für einen Ventilkörper 1 aus Kunststoff, welcher derart strömungsoptimiert ist, dass bei den Anschlussenden 4 mit einer vorgegebenen Nennweite der Durchflusswert der nächst größeren Nennweite erreicht wird. Zur Strömungsoptimierung wird ein stetiger Übergang 7 mit Hinterschneidungen 8 am Übergangsbereich von Anschlussenden 4 und Sitzkontur 5 dadurch ausgebildet, dass der Innenkörper 2 als Rohling in eine entsprechende Form eingelegt, erwärmt und dann gegen die Kontur mit einem stetigen Übergang zwischen Anschlussenden 4 und Sitzkontur 5, vorzugsweise mittels Druckluft angepresst wird. Mit dem erfindungsgemäßen Verfahren lässt sich somit ein Ventilkörper 1 herstellen, welcher am Übergangsbereich von Anschlussenden 4 und Sitzkontur 5 am Ventilbereich zum Ausbilden eines stetigen Übergangs Hinterschneidungen 8 besitzt, obgleich sich diese Hinterschneidungen 8 unmittelbar beim Spritzgießen des Innenkörpers 2 wegen den Entformungsverhältnissen nicht ausbilden lassen.

Selbstverständlich sind zahlreiche Abänderungen und Modifikationen möglich, die der Fachmann im Bedarfsfall treffen wird, ohne den Erfindungsgedanken zu verlassen. Insbesondere kann der Ventilkörper 1 auch mehr als zwei Spritzgusslagen umfassen, oder es können, gegebenenfalls an den Anschlussenden 4 oder am Sitzkonturbereich 5 noch zusätzliche andere, beispielsweise metallische Materialien eingesetzt und eingelegt werden. Auch können zur entsprechenden Ausgestaltung der Anschlussenden 4 auch andere Formgebungsmittel als dargestellt eingesetzt werden, um die Anschlussenden 4 beispielsweise in Form von Klemmverbindungen auszulegen.

### Bezugszeichen

- 1: Ventilkörper insgesamt
- 2: Innenkörper
- 3: Außenkörper
- 4: Anschlussenden, ausgebildet als Stutzen, Verschraubungen, Clamp etc.
- 5: Sitzkontur am Ventilbereich
- 6: Unstetigkeitsbereich
- 7: Stetiger Übergang
- 8: Hinterschneidungen

- D1: Nenndurchmesser der Innenkontur am jeweiligen Anschlussende 4
- D2: Nenndurchmesser der Sitzkontur 5 am Ventilbereich

## Patentansprüche

1. Verfahren zum Herstellen eines Ventilkörpers aus Kunststoff, welcher Anschlussenden (4) mit einer Innenkontur mit einem größeren Nenndurchmesser (D1) als eine Sitzkontur (D2) am Ventilbereich hat, wobei zuerst ein Rohling (2) mit den vorgegebenen Innenkonturen mittels Spritzgießen aus Kunststoff ausgeformt wird und dieser Rohling (2) in eine Form mit Hinterschneidungen (8) im Übergangsbereich zur Sitzkontur (5) am Ventilbereich mit kleinerem Durchmesser (D2) eingelegt, erwärmt und an die Kontur der Form zur Ausbildung der Hinterschneidungen (8) im Innenkonturbereich angepresst wird, wodurch der Ventilkörper derart strömungsoptimiert wird, dass bei Anschlussenden (4) mit einer vorgegebenen Nennweite der Durchflusswert der nächst größeren Nennweite erreicht wird.

2. Verfahren nach Anspruch 1, **dadurch gekennzeichnet, dass** das Anpressen mittels unter Überdruck stehendem Gas, vorzugsweise Luft, erfolgt.

3. Verfahren nach einem der vorangehenden Ansprüche, **dadurch gekennzeichnet, dass** der Ventilkörper (1) anschließend mit einem verstärkten Kunststoff außenseitig (Außenkörper 3) umspritzt wird.

## Claims

1. Method for manufacturing a plastic valve body which has connecting ends (4) having an inner contour with a larger nominal diameter (D1) than a seat contour (D2) in the valve region, wherein first a blank (2) having the specified inner contours is formed from plastic by means of injection moulding and this blank (2) is placed in a mould having undercuts (8) in the transition region to the seat contour (5) in the valve region with smaller diameter (D2), and is heated and pressed against the contour of the mould in order to form the undercuts (8) in the inner contour region, with the result that the valve body is optimized with respect to flow in such a way that the flow value of the next largest nominal width is achieved in the case of connecting ends (4) with a specified nominal width.

2. Method according to Claim 1, **characterized in that** the pressing is effected by means of gas, preferably air, under superatmospheric pressure.

3. Method according to either of the preceding claims, **characterized in that** the valve body (1) is subsequently coated on the outside (outer body 3) with a reinforced plastic by injection moulding.

## Revendications

1. Procédé pour fabriquer un corps de soupape en matière plastique, qui présente des extrémités de raccordement (4) avec un contour intérieur ayant un diamètre nominal (D1) supérieur à celui (D2) d'un contour de siège dans la zone de la soupape, dans lequel d'abord une ébauche (2) avec les contours intérieurs prédéfinis est formée en matière plastique par moulage par injection, et cette ébauche (2) est insérée dans un moule avec des contre-dépouilles (8) dans la zone de transition au contour de siège (5) dans la zone de soupape de diamètre inférieur (D2), est chauffée et adaptée au contour du moule pour réaliser les contre-dépouilles (8) dans la zone de contour intérieur, de sorte que le corps de soupape est optimisé en écoulement de telle sorte que pour des extrémités de raccordement (4) d'une largeur nominale prédéfinie, la valeur de débit de la largeur nominale supérieure suivante est atteinte.

2. Procédé selon la revendication 1, **caractérisé en ce que** la compression s'effectue au moyen d'un gaz, de préférence d'air, sous pression manométrique.

3. Procédé selon l'une quelconque des revendications précédentes, **caractérisé en ce que** le corps de soupape (1) est ensuite surmoulé à l'extérieur (corps extérieur 3) avec une matière plastique renforcée.
